(19) Europäisches Patentamt
European Patent Office
Office européen des brevets

(11) **EP 2 775 759 A1**

(12) **EUROPEAN PATENT APPLICATION**
published in accordance with Art. 153(4) EPC

(43) Date of publication:
**10.09.2014 Bulletin 2014/37**

(51) Int Cl.:
***H04W 28/16*** (2009.01)

(21) Application number: **12846971.5**

(86) International application number:
**PCT/CN2012/084228**

(22) Date of filing: **07.11.2012**

(87) International publication number:
**WO 2013/067937 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2011 CN 201110348340**

(71) Applicant: **Huawei Technologies Co., Ltd.**
**Shenzhen, Guangdong 518129 (CN)**

(72) Inventor: **ZHOU, Mingyu**
**Shenzhen**
**Guangdong 518129 (CN)**

(74) Representative: **Goddar, Heinz J. et al**
**Boehmert & Boehmert**
**Anwaltspartnerschaft mbB**
**Patentanwälte Rechtsanwälte**
**Pettenkoferstrasse 20-22**
**80336 München (DE)**

(54) **METHOD FOR TRANSMITTING UPLINK REFERENCE SIGNALS, USER EQUIPMENT AND BASE STATION**

(57) The embodiments of the present invention provide a method for sending an uplink reference signal, a user equipment, and a base station. The method for sending an uplink reference signal includes: receiving, by a user equipment, first information sent by a base station, where the first information is used for indicating that the user equipment sends a demodulation reference signal on a part of subcarriers allocated by the base station to the user equipment; receiving, by the user equipment, second information sent by the base station, where the second information is information used for indicating the subcarriers for sending the demodulation reference signal; and generating, by the user equipment, according to the first information and the second information, the demodulation reference signal, and mapping the demodulation reference signal to the subcarriers indicated by the second information to send the demodulation reference signal to the base station. The embodiments of the present invention are capable of keeping demodulation reference signals sent by user equipments in different cells orthogonal to each other, thereby guaranteeing the gain brought by the CoMP technology.

FIG. 1

**EP 2 775 759 A1**

**Description**

**CROSS-REFERENCE TO RELATED APPLICATION**

This application claims priority to Chinese Patent Application CN 201110348340.X, filed with the Chinese Patent Office on November 7, 2011 and entitled "METHOD FOR SENDING UPLINK REFERENCE SIGNAL, USER EQUIPMENT, AND BASE STATION", which is incorporated herein by reference in its entirety.

**TECHNICAL FIELD**

The present invention relates to the field of communications technologies, and in particular, to a method for sending an uplink reference signal, a user equipment, and a base station.

**BACKGROUND**

In the uplink transmission in a Long Term Evolution (Long Term Evolution, LTE for short below) system and a Long Term Evolution-advanced (LTE-Advanced) system, a base station allocates a predetermined number of physical resource blocks (Physical Resource Blocks, PRBs for short below) to a user equipment (User Equipment, UE for short below), and the UE sends demodulation reference signals (Demodulation Reference Signal, DM RS for short below) and data on these PRBs. The DM RS is used for channel estimation to facilitate the demodulation of data by the base station, and the DM RS is transmitted on one symbol in each time slot. For example, 1 transmission time interval (Transmission Time Interval, TTI for short below) includes 2 time slots or 14 symbols in terms of the time, each time slot includes 7 symbols, the fourth symbol in each time slot is used for transmitting a DM RS, and other symbols are used for transmitting data. The UE sends data symbols of one TTI to the base station, and upon receiving the data symbols, the base station estimates uplink channel information through the DM RS so as to demodulate the data symbols. Here, one PRB occupies 12 subcarriers on the band, and both the data and DM RSs are transmitted on all subcarriers of the PRBs scheduled by the base station for the UE.

In an LTE system and an LTE-Advanced system, all UEs in one same cell use the sequence of one same group, whereas UEs in different cells use sequences of different groups, and as the sequences of different groups are less correlated, the interferences among DM RSs sent by the UEs in different cells are lower, which enhances the precision of channel estimation.

In addition, the base station sends to the UE cyclic shift (Cyclic Shift, CS for short below) information and orthogonal cover code (Orthogonal Cover Code, OCC) information, the UE, according to the received CS information, performs a corresponding cyclic shift on the sequence used in the cell, then jointly multiplies the DM RSs in two time slots of one same TTI by an OCC, and then performs inverse discrete Fourier transform (Inverse Discrete Fourier Transform, IDFT for short below) to generate DM RSs to be sent. Both the CS and OCC are orthogonalization methods and can be used to distinguish different antenna ports of different UEs or one same UE. For example, a UE1 and a UE2 use different CSs or OCCs to generate DM RSs, and the DM RSs sent by the UE1 and the UE2 are orthogonal to each other. Different antenna ports of the UE1 use different CSs or OCCs to generate DM RSs, so DM RSs sent by different antenna ports of the UE1 are orthogonal to each other. Therefore, the base station is capable of allocating different CSs and/or OCCs to different UEs to keep the DM RSs sent by different UEs orthogonal to each other. That the base station schedules a plurality of UEs to perform synchronous transmission on overlapped frequency resources may also be regarded as that the base station matches a plurality of UEs.

With the advance of technologies, the Coordinated Multiple Point transmission/reception (Coordinated Multiple Point transmission/reception, CoMP for short below) technology is introduced, that is, a plurality of cells is capable of demodulating signals sent by one same UE, so as to enhance the uplink performance. For example, if the CoMP technology is not adopted, the UE1 only sends an uplink signal to a cell 1, in which the UE1 sends a DM RS based on the configuration of the cell 1; the UE2 only sends an uplink signal to a cell 2, in which the UE2 sends a DM RS based on the configuration of the cell 2; the interference between the DM RSs sent by the UE1 and the UE2 is low. When the CoMP technology is adopted, both the UE1 and the UE2 send uplink signals to the two cells; however, the cell 2, when receiving the signal sent by the UE1, is disturbed by the signal sent by the UE2, and likewise, the cell 1, when receiving the signal sent by the UE2, is disturbed by the signal sent by the UE1, so that the gain brought by the CoMP technology is reduced.

**SUMMARY**

The present invention provides a method for sending an uplink reference signal, a user equipment, and a base station, so as to keep demodulation reference signals sent by user equipments in different cells orthogonal to each other,

**2**

thereby guaranteeing the gain brought by the CoMP technology.

On one aspect, the present invention provides a method for sending an uplink reference signal, which includes:

receiving, by a user equipment, first information sent by a base station, where the first information is used for indicating that the user equipment sends a demodulation reference signal on a part of subcarriers allocated by the base station to the user equipment;

receiving, by the user equipment, second information sent by the base station, where the second information is information used for indicating the subcarriers for sending the demodulation reference signal; and

generating, by the user equipment, according to the first information and the second information, the demodulation reference signal, and mapping the demodulation reference signal to the subcarriers indicated by the second information to send the demodulation reference signal to the base station.

On another aspect, the present invention further provides a method for sending an uplink reference signal, which includes:

generating, by a base station, first information, and sending the first information to a user equipment, where the first information is used for indicating that the user equipment sends a demodulation reference signal on a part of subcarriers allocated by the base station to the user equipment; and

generating, by the base station, second information, and sending the second information to the user equipment, where the second information is information used for indicating the subcarriers for sending the demodulation reference signal, so that the user equipment, according to the first information and the second information, generates the demodulation reference signal, and maps the demodulation reference signal to the subcarriers indicated by the second information to send the demodulation reference signal to the base station.

On another aspect, the present invention further provides a user equipment, which includes:

a receiver, configured to receive first information and second information sent by a base station, where the first information is used for indicating that the user equipment sends a demodulation reference signal on a part of subcarriers allocated by the base station to the user equipment, and the second information is information used for indicating the subcarriers for sending the demodulation reference signal;

a processor, configured to, according to the first information and the second information received by the receiver, generate the demodulation reference signal; and

a sender, configured to map the demodulation reference signal generated by the processor to the subcarriers indicated by the second information to send the demodulation reference signal to the base station.

On another aspect, the present invention further provides a base station, which includes:

a processor, configured to generate first information and second information, where the first information is used for indicating that a user equipment sends a demodulation reference signal on a part of subcarriers allocated by the base station to the user equipment, and the second information is information used for indicating the subcarriers for sending the demodulation reference signal; and

a sender, configured to send the first information and the second information generated by the processor to the user equipment, so that the user equipment, according to the first information and the second information, generates the demodulation reference signal, and maps the demodulation reference signal to the subcarriers indicated by the second information to send the demodulation reference signal to the base station.

By means of the present invention, after receiving first information and second information sent by a base station, a user equipment, generates a demodulation reference signal according to the first information and the second information, and maps the demodulation reference signal to subcarriers indicated by the second information to send the demodulation reference signal to the base station. Therefore, the demodulation reference signals sent by user equipments in different cells are kept orthogonal to each other, thereby guaranteeing the gain brought by the CoMP technology.

**BRIEF DESCRIPTION OF DRAWINGS**

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.

FIG. 1 is a flow chart of a method for sending an uplink reference signal according to one embodiment of the present invention;
FIG 2 is a schematic diagram of subcarrier allocation according to one embodiment of the present invention;
FIG 3 is a flow chart of a method for sending an uplink reference signal according to another embodiment of the present invention;
FIG 4 is a schematic structural diagram of a user equipment according to one embodiment of the present invention; and
FIG. 5 is a schematic structural diagram of a base station according to one embodiment of the present invention.

**DESCRIPTION OF EMBODIMENTS**

In order to make the objectives, technical solutions, and advantages of the present invention more comprehensible, the technical solutions according to the embodiments of the present invention will be clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

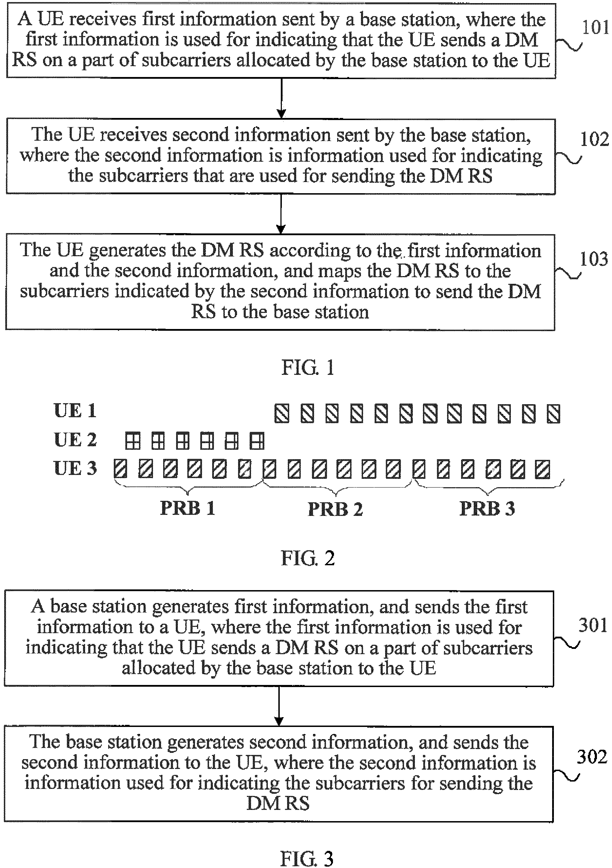

FIG 1 is a flow chart of a method for sending an uplink reference signal according to one embodiment of the present invention. As shown in FIG. 1, the method for an uplink reference signal may include the following steps.

Step 101: A UE receives first information sent by a base station, where the first information is used for indicating that the UE sends a DM RS on a part of subcarriers allocated by the base station to the UE.

Step 102: The UE receives second information sent by the base station, where the second information is information used for indicating the subcarriers for sending the DM RS.

In this embodiment, the information about the subcarriers may be sequence number or comb information of the subcarriers.

Step 103: The UE, according to the first information and the second information, generates the DM RS, and maps the DM RS to the subcarriers indicated by the second information to send the DM RS to the base station.

In this embodiment, as the first information indicates that the UE sends the DM RS on a part of subcarriers allocated by the base station to the UE, and the second information is information used for indicating the subcarriers for sending the DM RS, the base station is capable of allocating subcarriers other than the subcarriers indicated by the second information among the subcarriers allocated by the base station to the UE to UEs in cells other than the cell where the UE is located. As UEs in different cells send DM RSs by using different subcarriers, the DM RSs sent by the UEs in different cells are made orthogonal to each other. As shown in FIG. 2, FIG 2 is a schematic diagram of subcarrier allocation according to one embodiment of the present invention. It is assumed that each frequency resource includes 2 combs, one PRB includes 12 subcarriers, and each comb corresponds to 6 subcarriers in each PRB. If the second combs of PRBs 2 and 3 are allocated to a UE1, the second comb of a PRB1 is allocated to a UE2, and the first combs of the PRBs 1 to 3 are allocated to a UE3, the DM RSs sent by the UE1 to the UE3 do not interfere with each other.

For a UE, for example, the UE1, the entire process may be as follows: the base station sends to the UE1 the first information indicating that the UE1 sends a DM RS on a part of subcarriers allocated by the base station to the UE1; subsequently, the base station sends to the UE1 the second information, where the second information is information used for indicating the subcarriers for sending the DM RS. For example, the second information may indicate that the DM RS is sent on a subcarrier of an odd sequence number. After the UE1 receives the first information and the second information, as each PRB includes 12 subcarriers, the UE1 generates a DM RS with the length being 12, and as the sequence numbers of the PRBs allocated by the base station to the UE are 2 and 3, the UE1 maps the generated DM RS to subcarriers of the sequence numbers being 25, 27, ..., and 47 to send the DM RS to the base station.

In addition, in this embodiment, the UE is further capable of receiving information used for indicating that a UE sends a DM RS on all subcarriers allocated by the base station to the UE and sent by the base station, and at this time the UE is capable of generating a DM RS according to the information and maps the DM RS to all subcarriers allocated by the base station to the UE to send the DM RS to the base station. The embodiment of the present invention, by indicating that a UE sends a DM RS on all subcarriers allocated by the base station to the UE, is compatible with the design in the prior art, so as to benefit from the advantages of the design in the prior art.

In this embodiment, after receiving the first information and the second information sent by the base station, the UE generates a DM RS according to the first information and the second information, and maps the DM RS to the subcarriers indicated by the second information to send the DM RS to the base station. Therefore, the DM RSs sent by the UEs in different cells are kept orthogonal to each other, thereby guaranteeing the gain brought by the CoMP technology.

The method provided in the embodiment of the present invention is introduced in detail in the following.

In the embodiment shown in FIG 1 of the present invention, the second information is dynamic information, that is, the base station needs to send the second information to the UE each time scheduling the UE to perform uplink transmission, that is to say, the UE receives the second information sent by the base station each time the base station schedules the UE to perform uplink transmission. The first information is semi-static information; after the first information received at the Nth time becomes effective, and before the first information received at the (N + 1)th time becomes effective, the UE generates a DM RS according to the first information received at the Nth time and the second information, where the N is a non-negative integer.

For example, the base station sends, at the nth TTI, to the UE the first information indicating that the UE sends a DM RS on a part of subcarriers allocated by the base station to the UE, so that the effective time of the information can be the (n + k)th TTI, where k is an integer greater than or equal to 0, and k can be preset on the side of the base station and the UE. If the UE does not receive new first information again until the (n + T)th TTI after the UE receives the first information at the nth TTI, the UE uses the first information received at the nth TTI from the (n + k)th TTI to the (n + T + k - 1)th TTI, so that first information received at the (n + T)th TTI is used at the start from the (n + T + k)th TTI. In this manner, the first information sent by the base station each time may stay effective for a long time and it is not necessary to send first information once to the UE each time uplink transmission of the UE is scheduled. Therefore, the information overhead may be reduced.

The base station may send the second information to the UE by scheduling a physical downlink control channel (Physical Downlink Control Channel, PDCCH for short below) for the uplink transmission. For example, in an LTE-Advanced system, the base station sends a PDCCH to the UE at the nth TTI, and sends the second information to the UE while scheduling the UE to perform uplink transmission. The second information is included in the PDCCH, the UE sends an uplink signal at the (n + 4)th TTI after receiving the PDCCH, and the DM RS sent by the UE is generated according to the received first information and second information.

In the embodiment shown in FIG. 1 of the present invention, the information about a part of subcarriers allocated by the base station to the UE is comb information, and in each PRB, the ith comb corresponds to subcarriers of the sequence numbers i, i + Nc, i + 2Nc, ..., in which Nc denotes the number of usable combs of the UE.

For example, it is assumed that Nc = 2, which denotes that totally only 2 combs are provided, the first comb corresponds to subcarriers of odd sequence numbers, and the second comb corresponds to subcarriers of even sequence numbers. The number of combs can be preset, and can also be notified by the base station to the UE through other information.

In an implementation manner of the present invention, the Nc can be equal to the number of usable combs of a sounding reference signal (Sounding RS, SRS for short below).

In an LTE-Advanced system, besides the DM RS, the uplink RS further includes an SRS, which is used for sounding the condition of the uplink channel, the UE is capable of sending an SRS on a frequency band, and the base station, after receiving the SRS, is capable of learning the condition of the uplink channel on the frequency band, so as to rationally schedule the uplink transmission for the UE. In an LTE-Advanced system, the SRSs sent by different UEs may be ensured to be orthogonal to each other by using different combs, and the number of the usable combs of the SRS is 2. If the number of usable combs used for generating a DM RS is the same as the number of usable combs used for generating an SRS, the design of the SRS can simply be reused, that is, in the embodiment of the present invention, the method for generating an SRS can simply be reused to generate a DM RS, thereby reducing the complexity of implementation.

In another implementation manner of the present invention, the Nc can be equal to 3.

As in the research of the CoMP technology, a coordinated set usually includes 3 cells, that is, the signal sent by a UE is received by at most 3 cells, so that by setting that Nc equals 3, it may be guaranteed that the DM RSs sent by the UEs of 3 coordinated cells do not interfere with each other.

The present invention is illustrated in the following description by taking that Nc equals 2 as an example.

In an implementation manner of the embodiment shown in FIG. 1 of the present invention, the second information is further used for indicating the CS information. Step 103 may be as follows, the UE, according to the first information, determines to send a DM RS on a part of subcarriers allocated by the base station to the UE, and selects, among sequences used in a cell where the UE is located, a sequence whose length corresponds to the number of subcarriers indicated by the first information as the DM RS; next, the UE, according to the second information, queries a mapping between CS information and comb information saved by the UE, and obtains the subcarriers for sending the DM RS, and the CS information; in the end, the UE, according to the CS information, performs a cyclic shift on the DM RS, and maps the DM RS that has undergone the cyclic shift to the subcarriers for sending the DM RS to send the DM RS to the base station.

In an LTE-Advanced system, if the method provided in the embodiment of the present invention is not adopted, the UE performs a cyclic shift on a DM RS sequence according to formula (1):

$$r^{(\alpha)}(n) = e^{j\alpha n}\overline{r}(n), \quad 0 \le n < M_{sc}^{RS} \quad (1)$$

where $\overline{r}(n)$ denotes a DM RS that has not undergone a cyclic shift, $r^{(\alpha)}(n)$ denotes a DM RS that has undergone a cyclic shift, n denotes each element of the sequence with the length being $M_{sc}^{RS}$, $M_{sc}^{RS}$ denotes the number of subcarriers of the DM RS, that is, the length of the DM RS sequence, and for example, when 4 PRBs are allocated, $M_{sc}^{RS} = 48$; $\alpha = 2\pi n_{cs}/12$, in which $n_{cs}$ is the value of the cyclic shift.

When the method provided in the embodiment of the present invention is adopted, as the UE sends a DM RS by using only a part of subcarriers, the length of the DM RS sequence becomes smaller, yet the cyclic shift technology can still be adopted, so as to benefit from the advantages brought by the cyclic shift. For example, it is assumed that the number of combs of the DM RS is 2, so that the DM RS is sent only on 1/2 of the subcarriers in the PRB allocated by the base station to the UE, and the length of the DM RS sequence is only half of the length of the DM RS sequence in an LTE-Advanced system. For example, it is assumed that the base station allocates 4 PRBs to the UE, so that the length of the DM RS sequence is 4 × 12/2 = 24; at this time only a DM RS sequence with the length being 24 needs to be generated, then a cyclic shift is performed on the DM RS sequence according to the received CS information, and in the end the DM RS sequence that has undergone the cyclic shift is mapped to the 24 subcarriers.

In the embodiment of the present invention, if the second information includes 3 bits, the second information is capable of transferring 8 configuration combinations of CS information and comb information. As shown in Table 1, Table 1 is a mapping table of CS information and comb information when a UE sends an uplink signal via a single antenna port. In Table 1, when the second information sent by the base station to the UE is 001, it is denoted that the value of the CS information used by the UE is 6, the comb is 0 (that is, the UE sends a DM RS by using subcarriers of even sequence numbers).

**Table 1**

| Second Information | CS Information | Comb Information |
|---|---|---|
| 000 | 0 | 0 |
| 001 | 6 | 0 |
| 010 | 3 | 0 |
| 011 | 4 | 1 |
| 100 | 2 | 1 |
| 101 | 8 | 1 |
| 110 | 10 | 1 |
| 111 | 9 | 0 |

In another implementation manner of the embodiment shown in FIG. 1 of the present invention, the second information is further used for indicating CS information and OCC information. Step 103 may be as follows, the UE, according to the first information, determines to send a DM RS on a part of subcarriers allocated by the base station to the UE, and selects, among sequences used in a cell where the UE is located, a sequence whose length corresponds to the number of subcarriers, indicated by the first information as the DM RS; next, the UE, according to the second information, queries a mapping among CS information, OCC information and comb information saved by the UE, and obtains the subcarriers for sending the DM RS, the CS information, and the OCC information; next, the UE, according to the CS information, performs a cyclic shift on the DM RS, and loads an orthogonal cover code for the DM RS that has undergone the cyclic shift according to the OCC information; in the end, the UE maps the DM RS for which the orthogonal cover code has been loaded to the subcarriers for sending the DM RS to send the DM RS to the base station.

In an LTE-Advanced system, the OCC information is capable of providing further orthogonalization in the dimension of time domain, and the UE is capable of loading an orthogonal cover code for a DM RS sequence that has undergone a cyclic shift according to formula (2):

$$r_{\text{PUSCH}}\left(m \cdot M_{\text{sc}}^{\text{RS}} + n\right) = w(m)r^{(\alpha)}\left(n\right) \quad (2)$$

where m is 0 or 1, which denotes the DM RS symbols in the first or second time slot in one TTI, and *w*(*m*) is [1 1] or [1 -1].

In the embodiment of the present invention, the CS information, the OCC information, and the comb information are brought into the design of a DM RS at the same time to benefit from advantages of the three.

In the embodiment of the present invention, a nested form is adopted for the mapping between CS information and comb information, that is, for the same second information, the CS information and comb information used when the UE sends the DM RS through A antenna ports are a subset of the CS information and comb information used when the UE sends the DM RS through (A + i) antenna ports, in which A and i are positive integers.

In an LTE-Advanced system, the UE can send an uplink signal through at most 4 antenna ports spatially, and the mapping between CS information and OCC information may be shown in Table 2.

**Table 2**

| Configuration Information | CS Information | | | | OCC Information | | | |
|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ |
| 000 | 0 | 6 | 3 | 9 | [1 1] | [1 1] | [1 -1] | [1 -1] |
| 001 | 6 | 0 | 9 | 3 | [1 -1] | [1 -1] | [1 1] | [1 1] |
| 010 | 3 | 9 | 6 | 0 | [1 -1] | [1 -1] | [1 1] | [1 1] |
| 011 | 4 | 10 | 7 | 1 | [1 1] | [1 1] | [1 1] | [1 1] |
| 100 | 2 | 8 | 5 | 11 | [1 1] | [1 1] | [1 1] | [1 1] |
| 101 | 8 | 2 | 11 | 5 | [1 -1] | [1 -1] | [1 -1] | [1 -1] |
| 110 | 10 | 4 | 1 | 7 | [1 -1] | [1 -1] | [1 -1] | [1 -1] |
| 111 | 9 | 3 | 0 | 6 | [1 1] | [1 1] | [1 -1] | [1 -1] |

$\lambda$ in Table 2 denotes the sequence number of an antenna port, so that when the configuration information sent by the base station to the UE is 001, if the base station indicates that the UE sends an uplink signal through two antenna ports, the CS information used by the UE on the two antenna ports is 6 and 0, respectively, and the used OCC information is [1 -1] and [1 -1], respectively; if the base station indicates that the UE sends an uplink signal through 4 antenna ports, the CS information used by the UE at the 4 antenna ports are 6, 0, 9, and 3, respectively, and the used OCC information is [1 -1], [1 -1], [1 1], and [1 1], respectively. This is the nested form, and such design is simple.

In an implementation manner of the present invention, the CS information and the comb information are transferred through the second information, and a nested form may also be adopted, as shown in Table 3.

**Table 3**

| Second Information | CS Information | | | | Comb Information | | | |
|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ |
| 000 | 0 | 6 | 3 | 9 | 0 | 0 | 1 | 1 |
| 001 | 6 | 0 | 9 | 3 | 1 | 1 | 0 | 0 |
| 010 | 3 | 9 | 6 | 0 | 1 | 1 | 0 | 0 |
| 011 | 4 | 10 | 7 | 1 | 0 | 0 | 0 | 0 |
| 100 | 2 | 8 | 5 | 11 | 0 | 0 | 0 | 0 |
| 101 | 8 | 2 | 11 | 5 | 1 | 1 | 1 | 1 |
| 110 | 10 | 4 | 1 | 7 | 1 | 1 | 1 | 1 |
| 111 | 9 | 3 | 0 | 6 | 0 | 0 | 1 | 1 |

When the second information sent by the base station to the UE is 001, if the base station indicates that the UE sends an uplink signal through 2 antenna ports, the CS information used by the UE on the 2 antenna ports is 6 and 0 respectively, and the used comb information is 1 and 1, respectively; if the base station indicates that the UE sends an uplink signal through 4 antenna ports, the CS information used by the UE on the 4 antenna ports is 6, 0, 9, and 3, respectively, and the used comb information is 1, 1, 0, and 0, respectively. This is the nested form, and such design is simple.

In another implementation manner of the present invention, the CS information, the OCC information, and the comb information are transferred through the second information, as shown in Table 4.

**Table 4**

| Second Information | CS Information | | | | OCC Information | | | | Comb Information | | | |
|---|---|---|---|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ | $\lambda = 0$ | $\lambda = 1$ | $\lambda = 2$ | $\lambda = 3$ |
| 000 | 0 | 6 | 3 | 9 | [1 1] | [1 1] | [1 -1] | [1 -1] | 0 | 0 | 1 | 1 |
| 001 | 6 | 0 | 9 | 3 | [1 -1] | [1 -1] | [1 1] | [1 1] | 1 | 1 | 0 | 0 |
| 010 | 3 | 9 | 6 | 0 | [1 -1] | [1 -1] | [1 1] | [1 1] | 1 | 1 | 0 | 0 |
| 011 | 4 | 10 | 7 | 1 | [1 1] | [1 1] | [1 1] | [1 1] | 0 | 0 | 0 | 0 |
| 100 | 2 | 8 | 5 | 11 | [1 1] | [1 1] | [1 1] | [1 1] | 0 | 0 | 0 | 0 |
| 101 | 8 | 2 | 11 | 5 | [1 -1] | [1 -1] | [1 -1] | [1 -1] | 1 | 1 | 1 | 1 |
| 110 | 10 | 4 | 1 | 7 | [1 -1] | [1 -1] | [1 -1] | [1 -1] | 1 | 1 | 1 | 1 |
| 111 | 9 | 3 | 0 | 6 | [1 1] | [1 1] | [1 -1] | [1 -1] | 0 | 0 | 1 | 1 |

In the following, only the mapping between CS information and comb information is considered, and for the manner of a mapping among CS information, OCC information, and comb information, the OCC information can be simply added in the mapping between CS information and comb information, which is no longer described in the following.

In the embodiment of the present invention, in total 8 configuration combinations of CS information and comb information for the mapping between CS information and comb information are provided. In 4 solutions, the same comb information is adopted for all antenna ports through which the UE sends a DM RS, and in the rest 4 solutions, different comb information is used for antenna ports through which the UE sends a DM RS.

When the base station expects to schedule 2 UEs to match, and each UE performs transmission on 4 antenna ports, to ensure DM RSs sent by the two UEs to be orthogonal to each other through different combs, 2 combs need to be allocated to the two UE, respectively, so that, at least 2 of such configuration combinations are needed: the comb used in the transmission on 2 antenna ports among all the 4 antenna ports is 0(1), whereas the comb used in the transmission on the rest antenna ports is 1(0); and to enhance the scheduling flexibility, 4 configuration combinations are designed to support such a characteristic, that is, in 2 configuration combinations, the comb used in the transmission on all 4 antenna ports is 0, whereas in the rest 2 configuration combinations, the comb used in the transmission on all 4 antenna ports is 1.

In the embodiment of the present invention, the mapping between CS information and comb information is characterized in that, according to the mapping between CS information and comb information, the interval between the CS information used when the UE sends the DM RS corresponding to the second antenna port through the second antenna port and the CS information used when the UE sends the DM RS corresponding to the first antenna port through the first antenna port is 6, the interval between the CS information used when the UE sends the DM RS corresponding to the third antenna port through the third antenna port and the CS information used when the UE sends the DM RS corresponding to the first antenna port through the first antenna port is 3, and the interval between the CS information used when the UE sends the DM RS corresponding to the fourth antenna port through the fourth antenna port and the CS information used when the UE sends the DM RS corresponding to the first antenna port through the first antenna port is 9.

When the interval of CS information is larger, it is indicated that the orthogonality between different antenna ports is better. As $\alpha = 2\pi n_{cs}/12$, $n_{cs}$ can be an integral value from 0 to 11, that is, the value of CS can only be smaller than 12, so that the design of mapping between CS information and comb information can be optimized according to the principle. As shown in Table 3, for the transmission of 2 antenna ports, the interval between the CS information used by the DM RSs of the two antenna ports is 6; and for the transmission of 4 antenna ports, the minimum interval between the CS information used by the DM RSs of any two antenna ports is 3, so as to guarantee the maximum orthogonality.

In the embodiment of the present invention, according to the mapping between CS information and comb information, the comb information used when the UE sends the DM RS corresponding to the first antenna port through the first antenna port is the same as the comb information used when the UE sends the DM RS corresponding to the second antenna port through the second antenna port, and the comb information used when the UE sends the DM RS corresponding to the third antenna port through the third antenna port is the same as the comb information used when the UE sends the DM RS corresponding to the fourth antenna port through the fourth antenna port.

As shown in Table 3, the first and second columns of "comb information" are the same, and the third and fourth columns are also the same, so that it becomes convenient for the base station to match a plurality of UEs that performs transmission by using 2 antenna ports. For example, the base station schedules a UE1 to transmit an uplink signal through 2 antenna ports, and the base station schedules a UE2 to transmit an uplink signal through 2 antenna ports. It is assumed that the second information sent by the base station to the UE1 is 000, and the second information sent to the UE2 is 001. Therefore, the combs used by the UE1 to send an uplink DM RS on two antenna ports are both 0, and the combs used by the UE2 to send an uplink DM RS on two antenna ports are both 1, so that the DM RSs sent by the UE1 and the UE2 are orthogonal to each other. Otherwise, if different combs are used for the first antenna port and the second antenna port, as two antenna ports of one same UE occupy 2 combs, when matching two UEs that perform transmission through 2 antenna ports, the base station is unable to orthogonalize the DM RSs sent by the two UEs through different combs. At the same time, as the third and fourth antenna ports use the same comb, the allocation of combs becomes even, and also the interferences among DM RSs sent by different antenna ports become even.

In the mapping between CS information and comb information in the embodiment of the present invention, for configuration combinations, whose sequence number difference is 4, of CS information and comb information, the UE adopts the same comb information to send the DM RS corresponding to the first port through the first antenna port.

The sequence number of the configuration combination of CS information and comb information is the sequence number of second information, for example, the first column in Table 3.

In an LTE-Advanced system, the sequence number of the configuration information of the CS/OCC is at the same time used for indicating a resource for a base station to send an acknowledge (Acknowledge, ACK for short below)/negative acknowledge (Negative Acknowledge, NAK for short below). The base station sends a PDCCH to the UE at the nth TTI, in which the PDCCH includes the configuration information of the CS/OCC. Upon receiving the PDCCH, the UE generates a DM RS by using the information, and sends the uplink data and the DM RS to the base station at the (n + 4)th TTI. If, upon receiving the uplink data and the DM RS, the base station successfully demodulates the data, the base station feeds back an ACK at the (n + 8)th TTI; if failed, the base station feeds back a NAK at the (n + 8) TTI. The UE, according to the configuration information of the CS/OCC, acquires the sequence number of the resource for the base station to send an ACK/NAK, and acquires the ACK/NAK fed back by the base station at the (n + 8)th TTI, so as to learn whether the base station has successfully demodulated the data.

In some system configurations, in the process of acquiring the sequence number of the resource for the base station to send an ACK/NAK according to the configuration information of the CS/OCC, a modulo-4 operation needs to be performed on the sequence number of the configuration information of the CS/OCC. Therefore, the configurations of the CSs/OCCs whose sequence number difference is 4 (the results of modulo-4 are the same) might correspond to the same ACK/NAK resource (for example, the sequence numbers are 0 and 4), so that the configurations of different CSs/OCCs with the interval being 4 are usually designed to be combinations with relatively low orthogonality, which also causes the interval of combinations with high orthogonality not to be 4. When the base station chooses configuration combinations with high orthogonality to schedule a plurality of UEs, the collision of ACK/NAK resources is avoided, that is, a plurality of UEs uses different ACK/NAK resources.

As shown in Table 3, for configuration combinations, with the sequence numbers being 000 and 100 respectively, of CS information and comb information, the first antenna port uses the same comb and the orthogonality is low.

In the mapping between CS information and comb information in the embodiment of the present invention, the value of the CS information in the first column is the same as the value of CS information used in an LTE system, or is the same as the value of cyclic shift information used by the first antenna port in an LTE-Advanced system.

The LTE system only supports the transmission of a single antenna port, and the mapping table of the CS information and the second information is shown as the first two columns in Table 1; the LTE-Advanced system is evolved from an LTE system, and in consideration of the compatibility, the value of the CS information used by the first antenna port in the LTE-Advanced system is the same as the value of the CS information used in the LTE system.

In the embodiment of the present invention, the mapping between CS information and comb information can be shown in Table 3.

In the mapping between CS information and comb information in the embodiment of the present invention, the value [1 1] of the OCC information in the mapping between CS information and OCC information in the LTE-Advanced system is replaced with the value 0 of comb information, and the value [1 -1] of the OCC information is replaced with the value 1 of the comb information; alternatively, the value [1 1] of the OCC information in the mapping between CS information and OCC information in the LTE-Advanced system is replaced with the value 1 of the comb information, and the value [1 -1] of the OCC information is replaced with the value 0 of the comb information.

As can be seen from Table 2 and Table 3, the difference between Table 2 and Table 3 lies in that the OCC information in Table 2 is replaced with the comb information in Table 3, the value [1 1] of the OCC information in Table 2 is replaced with the value 0 of the comb information in Table 3, and the value [1 -1] of the OCC information in Table 2 is replaced with the value 1 of the comb information in Table 3. As the OCC information and the comb information have similar use, both being orthogonalization manners on the basis of CS information, so that if the design of the mapping between CS information and OCC information is simply followed, the benefits of the design of the mapping between CS information and OCC information in an LTE-Advanced system can be similarly acquired, and the implementation is simple.

In addition, two combs can further be switched, that is, the value [1 1] of the OCC information is replaced with the value 1 of the comb information, and the value [1 -1] of the OCC information is replaced with 0 of the comb information, as shown in Table 5.

**Table 5**

| Second Information | CS Information | | | | Comb Information | | | |
|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ |
| 000 | 0 | 6 | 3 | 9 | 1 | 1 | 0 | 0 |
| 001 | 6 | 0 | 9 | 3 | 0 | 0 | 1 | 1 |
| 010 | 3 | 9 | 6 | 0 | 0 | 0 | 1 | 1 |
| 011 | 4 | 10 | 7 | 1 | 1 | 1 | 1 | 1 |
| 100 | 2 | 8 | 5 | 11 | 1 | 1 | 1 | 1 |
| 101 | 8 | 2 | 11 | 5 | 0 | 0 | 0 | 0 |
| 110 | 10 | 4 | 1 | 7 | 0 | 0 | 0 | 0 |
| 111 | 9 | 3 | 0 | 6 | 1 | 1 | 0 | 0 |

In the embodiment of the present invention, the value set of the CS information may be {0, 3, 6, 9}.

The description of the above embodiments of the present invention are based on the assumption that the value in the first column of the CS information is the same as the value of the CS information used in the LTE system, and therefore the implementation is simple. In fact, the design of the value of the CS information in the LTE system takes an extreme condition into account, and the matching of at most 6 UEs may be supported. For example, in Table 1, the base station is capable of matching 6 UEs, and the values of the CS information configured for the 6 UEs are 0, 2, 4, 6, 8, and 10, respectively, so as to make respective DM RSs sent by the 6 UEs orthogonal to each other. However, when the DM RS is only sent on a part of subcarriers, the orthogonality in a CS interval is reduced. For example, when the total number of combs is 2, the orthogonality between different DM RSs with the CS interval being 4 is the same as the orthogonality between the different DM RSs with the CS interval being 2 in the LTE system (DM RSs are sent on all subcarrier). Therefore, the extreme design of matching 6 UEs is not required, and the design may be that, as shown in Table 6, any of all the values of CS information is a number in {0, 3, 6 and 9}.

**Table 6**

| Second Information | CS Information | | | | Comb Information | | | |
|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ |
| 000 | 0 | 6 | 3 | 9 | 0 | 0 | 0 | 0 |
| 001 | 6 | 0 | 9 | 3 | 1 | 1 | 1 | 1 |
| 010 | 3 | 9 | 6 | 0 | 0 | 0 | 0 | 0 |
| 011 | 0 | 6 | 3 | 9 | 1 | 1 | 0 | 0 |
| 100 | 9 | 3 | 0 | 6 | 0 | 0 | 1 | 1 |
| 101 | 3 | 9 | 6 | 0 | 1 | 1 | 0 | 0 |
| 110 | 6 | 0 | 9 | 3 | 0 | 0 | 1 | 1 |
| 111 | 9 | 3 | 0 | 6 | 1 | 1 | 1 | 1 |

In the embodiment of the present invention, if respective first antenna ports of any two configuration combinations among the configuration combinations of CS information and comb information correspond to the same CS information, the respective first antenna ports of the any two configuration combinations correspond to different comb information.

As shown in Table 6, for the configuration combinations, whose sequence numbers are 000 and 011, of CS information and comb information, respective first antenna ports of the two configuration combinations correspond to the same CS information, but the respective first antenna ports of the two configuration combinations correspond to different comb information being 0 and 1 respectively, so as to provide two choices of comb information for configuration combinations with the same CS information, thereby increasing the flexibility of scheduling.

In the embodiment of the present invention, when the value set of CS information is {0, 3, 6, 9}, the set of the configuration combinations of CS and comb information can be shown in Table 7.

**Table 7**

| CS Information | | | | Comb Information | | | |
|---|---|---|---|---|---|---|---|
| $\lambda = 0$ | $\lambda = 1$ | $\lambda = 2$ | $\lambda = 3$ | $\lambda = 0$ | $\lambda = 1$ | $\lambda = 2$ | $\lambda = 3$ |
| 0 | 6 | 3 | 9 | 0 | 0 | 0 | 0 |
| 6 | 0 | 9 | 3 | 1 | 1 | 1 | 1 |
| 3 | 9 | 6 | 0 | 0 | 0 | 0 | 0 |
| 0 | 6 | 3 | 9 | 1 | 1 | 0 | 0 |
| 9 | 3 | 0 | 6 | 0 | 0 | 1 | 1 |
| 3 | 9 | 6 | 0 | 1 | 1 | 0 | 0 |
| 6 | 0 | 9 | 3 | 0 | 0 | 1 | 1 |
| 9 | 3 | 0 | 6 | 1 | 1 | 1 | 1 |

The word "set" in the set of configuration combinations of CS and comb information is to protect all configuration combinations of CS information and comb information in Table 7, but is not to strictly bind the fixed relationships between the second information and these configuration combinations, that is to say, lines in Table 7 can be switched between each other flexibly.

The method for sending an uplink reference signal provided in the embodiment of the present invention is applicable to a scenario of sending an uplink DM RS, and different combs can be used to keep uplink DM RSs sent by UEs in different cells orthogonal to each other, thereby guaranteeing the gain brought by the CoMP technology, achieving compatibility, and being flexibly applicable to various scenarios.

FIG. 3 is a flow chart of a method for sending an uplink reference signal according to another embodiment of the present invention. As shown in FIG 3, the method for sending an uplink reference signal may include the following steps.

Step 301: A base station generates first information, and sends the first information to a UE, where the first information is used for indicating that the UE sends a DM RS on a part of subcarriers allocated by the base station to the UE.

Step 302: The base station generates second information, and sends the second information to the UE, where the second information is information used for indicating the subcarriers for sending the DM RS, so that the UE, according to the first information and the second information, generates the DM RS, and maps the DM RS to the subcarriers indicated by the second information to send the DM RS to the base station.

In an implementation manner of this embodiment, the second information is further used for indicating CS information, and before the second information is sent to the UE, the base station may further perform joint coding on the information for indicating subcarriers for sending a DM RS and the CS information.

In another implementation manner of this embodiment, the second information is used for indicating CS information and OCC information, and before the second information is sent to the UE, the base station may further perform joint coding on the information for indicating subcarriers for sending a DM RS, the CS information and the OCC information.

In the embodiment, the DM RSs sent by the UEs in different cells can be kept orthogonal to each other, thereby guaranteeing the gain brought by the CoMP technology.

Those of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk or an optical disk.

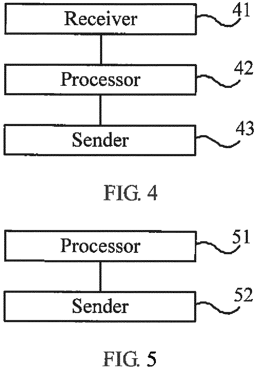

FIG 4 is a schematic structural diagram of a user equipment according to one embodiment of the present invention. The UE in this embodiment is capable of implementing the process in the embodiment shown in FIG 1 of the present invention, and as shown in FIG. 4, the UE may include: a receiver 41, processor 42, and a sender 43.

The receiver 41 is configured to receive first information and second information sent by a base station, where the first information is used for indicating that the UE sends a DM RS on a part of subcarriers allocated by the base station to the UE, and the second information is information used for indicating the subcarriers for sending the DM RS.

The processor 42 is configured to, according to the first information and the second information received by the receiver 41, generate the DM RS.

The sender 43 is configured to map the DM RS generated by the processor 42 to the subcarriers indicated by the second information to send the DM RS to the base station.

Specifically, the receiver 41 is capable of receiving the second information sent by the base station each time when the base station schedules the UE to perform uplink transmission.

At this time, the processor 42 is capable of, after the first information received by the receiver 41 at the Nth time becomes effective, and before the first information received by the receiver 41 at the (N + 1)th time becomes effective, generating the DM RS according to the first information received at the Nth time and the second information, in which N is a non-negative integer.

In an implementation manner in this embodiment, the processor 42 is capable of, when the second information is further used for indicating CS information, according to the first information, determining to send a DM RS on a part of subcarriers allocated by the base station to the UE, and selecting, among sequences used in a cell where the UE is located, a sequence whose length corresponds to the number of subcarriers indicated by the first information as a DM RS; according to the second information, querying the mapping between CS information and comb information saved by the UE, and obtaining the subcarriers for sending the DM RS and the CS information; and according to the CS information, performing a cyclic shift on the DM RS.

The sender 43 is specifically configured to map the DM RS that has undergone the cyclic shift to the subcarriers for sending the DM RS to send the DM RS to the base station.

In another implementation manner of this embodiment, the processor 42 is specifically configured to, when the second information further includes CS information and OCC information, according to the first information, determine to send a DM RS on a part of subcarriers allocated by the base station to the UE, and select, among sequences used in a cell where the UE is located, a sequence whose length corresponds to the number of subcarriers indicated by the first information as a DM RS; according to the second information, query a mapping among CS information, OCC information, and comb information saved by the UE, and obtain subcarriers for sending the DM RS, CS information and OCC information; and according to the CS information, perform a cyclic shift on the DM RS, and according to the OCC information, load an orthogonal cover code for the DM RS that has undergone the cyclic shift.

The sender 43 is specifically configured to map the DM RS for which the orthogonal cover code is loaded to the subcarriers for sending the DM RS to send the DM RS to the base station.

In the UE, after the receiver 41 receives the first information and the second information sent by the base station, the processor 42 generates a DM RS according to the first information and the second information, and the sender 43 maps the DM RS to the subcarriers indicated by the second information to send the DM RS to the base station. Therefore, the DM RSs sent by the UEs in different cells are kept orthogonal to each other, thereby guaranteeing the gain brought by the CoMP technology.

FIG. 5 is a schematic structural diagram of a base station according to one embodiment of the present invention. The base station in this embodiment is capable of implementing the process in the embodiment shown in FIG. 3 of the present invention. As shown in FIG. 5, the base station may include: a processor 51 and a sender 52.

The processor 51 is configured to generate first information and second information, where the first information is used for indicating that a UE sends a DM RS on a part of subcarriers allocated by the base station to the UE; and the second information is information used for indicating the subcarriers for sending the DM RS.

The sender 52 is configured to send to the UE the first information and the second information generated by the processor 51, so that the UE, according to the first information and the second information, generates the DM RS, and maps the DM RS to the subcarriers indicated by the second information to send the DM RS to the base station.

Furthermore, in an implementation manner in this embodiment, the processor 51 is specifically configured to, when the second information is further used for indicating CS information, perform joint coding on the information for indicating subcarriers for sending a DM RS and the CS information.

Furthermore, in another implementation manner in this embodiment, the processor 51 is specifically configured to, when the second information is further used for indicating CS information and OCC, perform joint coding on the information for indicating subcarriers for sending a DM RS, the CS information, and the OCC information.

The embodiment is capable of keeping the DM RSs sent by UEs in different cells orthogonal to each other, thereby guaranteeing the gain brought by the CoMP technology.

It should be understood by persons skilled in the art that the accompanying drawings are merely schematic diagrams of an exemplary embodiment, and modules or processes in the accompanying drawings are not necessarily required in implementing the present invention.

It should be understood by persons skilled in the art that, modules in a device according to an embodiment may be distributed in the device of the embodiment according to the description of the embodiment, or be correspondingly changed to be disposed in one or more devices different from this embodiment. The modules of the above embodiment may be combined into one module, or further divided into a plurality of sub-modules.

Finally, it should be noted that the above embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the scope of the technical solutions of the embodiments of the present invention.

**Claims**

1. A method for sending an uplink reference signal, comprising:

   receiving, by a user equipment, first information sent by a base station, wherein the first information is used for indicating that the user equipment sends a demodulation reference signal on a part of subcarriers allocated by the base station to the user equipment;
   receiving, by the user equipment, second information sent by the base station, wherein the second information is information used for indicating the subcarriers for sending the demodulation reference signal; and
   generating, by the user equipment, according to the first information and the second information, the demodulation reference signal, and mapping the demodulation reference signal to the subcarriers indicated by the second information to send the demodulation reference signal to the base station.

2. The method according to claim 1, wherein the receiving, by the user equipment, second information sent by the base station comprises:

   receiving, by the user equipment, the second information sent by the base station each time when the base station schedules the user equipment to perform uplink transmission.

3. The method according to claim 2, wherein the generating, by the user equipment, according to the first information and the second information, the demodulation reference signal comprises:

   after the first information received by the user equipment at the Nth time becomes effective, and before the first information received at the $(N + 1)$th time becomes effective, according to the first information received at the Nth time and the second information, generating the demodulation reference signal, wherein N is a non-negative integer.

4. The method according to any one of claims 1 to 3, wherein
   the information about the subcarriers is comb information, and in each physical resource block, the ith comb corresponds to subcarriers of the sequence numbers $i, i + Nc, i + 2Nc, ...$, and Nc denotes the number of usable combs of the user equipment.

5. The method according to claim 4, wherein the Nc is equal to the number of usable combs of a sounding reference signal.

6. The method according to claim 4, wherein the Nc equals 3.

7. The method according to claim 4, wherein the second information is further used for indicating cyclic shift information; and
   the generating, by the user equipment, according to the first information and the second information, the demodulation reference signal, and mapping the demodulation reference signal to the subcarriers indicated by the second information to send the demodulation reference signal to the base station comprises:

determining, by the user equipment, according to the first information, to send the demodulation reference signal on a part of subcarriers allocated by the base station to the user equipment, and selecting, among sequences used in a cell where the user equipment is located, a sequence whose length corresponds to the number of the subcarriers indicated by the first information, as the demodulation reference signal;

querying, by the user equipment, according to the second information, a mapping between cyclic shift information and comb information saved by the user equipment, and obtaining the subcarriers for sending the demodulation reference signal and cyclic shift information; and

performing, by the user equipment, according to the cyclic shift information, a cyclic shift on the demodulation reference signal, and mapping the demodulation reference signal that has undergone the cyclic shift to the subcarriers for sending the demodulation reference signal to send the demodulation reference signal to the base station.

8. The method according to claim 4, wherein the second information is further used for indicating cyclic shift information and orthogonal cover code information; and

the generating, by the user equipment, according to the first information and the second information, the demodulation reference signal, and mapping the demodulation reference signal to the subcarriers indicated by the second information to send the demodulation reference signal to the base station comprises:

determining, by the user equipment, according to the first information, to send the demodulation reference signal on a part of subcarriers allocated by the base station to the user equipment, and selecting, among sequences used in a cell where the user equipment is located, a sequence whose length corresponds to the number of the subcarriers indicated by the first information, as the demodulation reference signal;

querying, by the user equipment, according to the second information, a mapping among cyclic shift information, orthogonal encoding information, and comb information saved by the user equipment, and obtaining subcarriers for sending the demodulation reference signal, cyclic shift information and orthogonal encoding information;

performing, by the user equipment, according to the cyclic shift information, a cyclic shift on the demodulation reference signal, and according to the orthogonal cover code information, loading an orthogonal cover code for the demodulation reference signal that has undergone the cyclic shift; and

mapping, by the user equipment, the demodulation reference signal for which the orthogonal cover code is loaded to the subcarriers for sending the demodulation reference signal to send the demodulation reference signal to the base station.

9. The method according to claim 7 or 8, wherein

for the same second information, cyclic shift information and comb information used when the user equipment sends the demodulation reference signal through A antenna ports are a subset of cyclic shift information and comb information used when the user equipment sends the demodulation reference signal through (A + i) antenna ports; and A and i are positive integers.

10. The method according to claim 7 or 8, wherein

in the mapping between cyclic shift information and comb information, 8 configuration combinations of the cyclic shift information and the comb information are provided, in 4 solutions, the same comb information is adopted for all antenna ports through which the user equipment sends the demodulation reference signal, and in the rest 4 solutions, different comb information is adopted for antenna ports through which the user equipment sends the demodulation reference signal.

11. The method according to claim 7 or 8, wherein

according to the mapping between cyclic shift information and comb information, the interval between the cyclic shift information used when the user equipment sends the demodulation reference signal corresponding to the second antenna port through the second antenna port and the cyclic shift information used when the user equipment sends the demodulation reference signal corresponding to the first antenna port through the first antenna port is 6, the interval between the cyclic shift information used when the user equipment sends the demodulation reference signal corresponding to the third antenna port through the third antenna port and the cyclic shift information used when the user equipment sends the demodulation reference signal corresponding to the first antenna port through the first antenna port is 3, and the interval between the cyclic shift information used when the user equipment sends the demodulation reference signal corresponding to the fourth antenna port through the fourth antenna port and the cyclic shift information used when the user equipment sends the demodulation reference signal corresponding to the first antenna port through the first antenna port is 9.

**12.** The method according to claim 7 or 8, wherein
according to the mapping between cyclic shift information and comb information, the comb information used when the user equipment sends the demodulation reference signal corresponding to the first antenna port through the first antenna port is the same as the comb information used when the user equipment sends the demodulation reference signal corresponding to the second antenna port through the second antenna port, and the comb information used when the user equipment sends the demodulation reference signal corresponding to the third antenna port through the third antenna port is the same as the comb information used when the user equipment sends the demodulation reference signal corresponding to the fourth antenna port through the fourth antenna port.

**13.** The method according to claim 7 or 8, wherein
in the mapping between cyclic shift information and comb information, for configuration combinations, whose sequence number difference is 4, of cyclic shift information and comb information, the user equipment adopts the same comb information to send the demodulation reference signal corresponding to the first antenna port through the first antenna port.

**14.** The method according to claim 7 or 8, wherein in the mapping between cyclic shift information and comb information, the value in the first column of the cyclic shift information is the same as the value of cyclic shift information used in a Long Term Evolution system, or is the same as the value of cyclic shift information used by a first antenna port in a Long Term Evolution-advanced system.

**15.** The method according to claim 7 or 8, wherein the mapping between cyclic shift information and comb information is shown in the following table:

| Second Information | Cyclic Shift Information | | | | Comb Information | | | |
|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ |
| 000 | 0 | 6 | 3 | 9 | 0 | 0 | 1 | 1 |
| 001 | 6 | 0 | 9 | 3 | 1 | 1 | 0 | 0 |
| 010 | 3 | 9 | 6 | 0 | 1 | 1 | 0 | 0 |
| 011 | 4 | 10 | 7 | 1 | 0 | 0 | 0 | 0 |
| 100 | 2 | 8 | 5 | 11 | 0 | 0 | 0 | 0 |
| 101 | 8 | 2 | 11 | 5 | 1 | 1 | 1 | 1 |
| 110 | 10 | 4 | 1 | 7 | 1 | 1 | 1 | 1 |
| 111 | 9 | 3 | 0 | 6 | 0 | 0 | 1 | 1 |

**16.** The method according to claim 7 or 8, wherein the value set of the cyclic shift information is {0, 3, 6, 9}.

**17.** The method according to claim 16, wherein the configuration combination of cyclic shift information and comb information is shown in the following table:

| Cyclic Shift Information | | | | Comb Information | | | |
|---|---|---|---|---|---|---|---|
| $\lambda = 0$ | $\lambda = 1$ | $\lambda = 2$ | $\lambda = 3$ | $\lambda = 0$ | $\lambda = 1$ | $\lambda = 2$ | $\lambda = 3$ |
| 0 | 6 | 3 | 9 | 0 | 0 | 0 | 0 |
| 6 | 0 | 9 | 3 | 1 | 1 | 1 | 1 |
| 3 | 9 | 6 | 0 | 0 | 0 | 0 | 0 |
| 0 | 6 | 3 | 9 | 1 | 1 | 0 | 0 |
| 9 | 3 | 0 | 6 | 0 | 0 | 1 | 1 |
| 3 | 9 | 6 | 0 | 1 | 1 | 0 | 0 |

(continued)

| Cyclic Shift Information | | | | Comb Information | | | |
|---|---|---|---|---|---|---|---|
| $\lambda = 0$ | $\lambda = 1$ | $\lambda = 2$ | $\lambda = 3$ | $\lambda = 0$ | $\lambda = 1$ | $\lambda = 2$ | $\lambda = 3$ |
| 6 | 0 | 9 | 3 | 0 | 0 | 1 | 1 |
| 9 | 3 | 0 | 6 | 1 | 1 | 1 | 1 |

18. The method according to claim 7 or 8, wherein if, among configuration combinations of cyclic shift information and comb information, respective first antenna ports in any two configuration combinations correspond to the same cyclic shift information, the respective first antenna ports in the any two configuration combinations correspond to different comb information.

19. A method for sending an uplink reference signal, comprising:

generating, by a base station, first information, and sending the first information to a user equipment, wherein the first information is used for indicating that the user equipment sends a demodulation reference signal on a part of subcarriers allocated by the base station to the user equipment;
generating, by the base station, second information, and sending the second information to the user equipment, wherein the second information is information used for indicating the subcarriers for sending the demodulation reference signal, so that the user equipment, according to the first information and the second information, generates the demodulation reference signal, and maps the demodulation reference signal to the subcarriers indicated by the second information to send the demodulation reference signal to the base station.

20. The method according to claim 19, wherein the second information is further used for indicating cyclic shift information; and
before the second information is sent to the user equipment, the method further comprises:

performing, by the base station, joint coding on the information for indicating the subcarriers for sending the demodulation reference signal and the cyclic shift information.

21. The method according to claim 19, wherein the second information is further used for indicating cyclic shift information and orthogonal cover code information; and
before the second information is sent to the user equipment, the method further comprises:

performing, by the base station, joint coding on the information for indicating the subcarriers for sending the demodulation reference signal, the cyclic shift information, and the orthogonal cover code information.

22. A user equipment, comprising:

a receiver, configured to receive first information and second information sent by a base station, wherein the first information is used for indicating that the user equipment sends a demodulation reference signal on a part of subcarriers allocated by the base station to the user equipment, and the second information is information used for indicating the subcarriers for sending the demodulation reference signal;
a processor, configured to, according to the first information and the second information received by the receiver, generate the demodulation reference signal; and
a sender, configured to map the demodulation reference signal generated by the processor to the subcarriers indicated by the second information to send the demodulation reference signal to the base station.

23. The user equipment according to claim 22, wherein
the receiver is specifically configured to receive the second information sent by the base station each time when the base station schedules the user equipment to perform uplink transmission.

24. The user equipment according to claim 23, wherein
the processor is specifically configured to, after the first information received by the receiver at the Nth time becomes effective, and before the first information received by the receiver at the (N + 1)th time becomes effective, according to the first information received at the Nth time and the second information, generate the demodulation reference signal, wherein N is a non-negative integer.

25. The user equipment according to any one of claims 22 to 24, wherein
the processor is specifically configured to, when the second information is further used for indicating cyclic shift information, according to the first information, determine to send a demodulation reference signal on a part of subcarriers allocated by the base station to the user equipment, and select, among sequences used in a cell where the user equipment is located, a sequence whose length corresponds to the number of subcarriers indicated by the first information, as the demodulation reference signal; according to the second information, query a mapping between cyclic shift information and comb information saved by the user equipment, and obtain the subcarriers for sending the demodulation reference signal and the cyclic shift information; and according to the cyclic shift information, perform a cyclic shift on the demodulation reference signal; and
the sender is specifically configured to map the demodulation reference signal that has undergone the cyclic shift to the subcarriers for sending the demodulation reference signal to send the demodulation reference signal to the base station.

26. The user equipment according to any one of claims 22 to 24, wherein
the processor is specifically configured to, when the second information is further used for indicating cyclic shift information and orthogonal cover code information, according to the first information, determine to send the demodulation reference signal on a part of subcarriers allocated by the base station to the user equipment, and select, among sequences used in a cell where the user equipment is located, a sequence whose length corresponds to the number of subcarriers indicated by the first information, as the demodulation reference signal; according to the second information, query a mapping among cyclic shift information, orthogonal encoding information, and comb information saved by the user equipment, and obtain the subcarrier for sending the demodulation reference signal, the cyclic shift information, and the orthogonal encoding information; and according to the cyclic shift information, perform a cyclic shift on the demodulation reference signal, and according to the orthogonal cover code information, load an orthogonal cover code for the demodulation reference signal that has undergone the cyclic shift; and
the sender is specifically configured to map the demodulation reference signal for which the orthogonal cover code is loaded to the subcarriers for sending the demodulation reference signal to send the demodulation reference signal to the base station.

27. A base station, comprising:

a processor, configured to generate first information and second information, wherein the first information is used for indicating that a user equipment sends a demodulation reference signal on a part of subcarriers allocated by the base station to the user equipment; and the second information is information used for indicating the subcarriers for sending the demodulation reference signal; and
a sender, configured to send the first information and the second information generated by the processor to the user equipment, so that the user equipment, according to the first information and the second information, generates the demodulation reference signal, and maps the demodulation reference signal to the subcarriers indicated by the second information to send the demodulation reference signal to the base station.

28. The base station according to claim 27, wherein
the processor is specifically configured to, when the second information is further used for indicating cyclic shift information, perform joint coding on the information for indicating the subcarriers for sending the demodulation reference signal and the cyclic shift information.

29. The base station according to claim 27, wherein
the processor is specifically configured to, when the second information is further used for indicating cyclic shift information and orthogonal cover code information, perform joint coding on the information for indicating the subcarriers for sending the demodulation reference signal, the cyclic shift information, and the orthogonal cover code information.

A UE receives first information sent by a base station, where the first information is used for indicating that the UE sends a DM RS on a part of subcarriers allocated by the base station to the UE — 101

The UE receives second information sent by the base station, where the second information is information used for indicating the subcarriers that are used for sending the DM RS — 102

The UE generates the DM RS according to the first information and the second information, and maps the DM RS to the subcarriers indicated by the second information to send the DM RS to the base station — 103

FIG. 1

UE 1

UE 2

UE 3

PRB 1          PRB 2          PRB 3

FIG. 2

A base station generates first information, and sends the first information to a UE, where the first information is used for indicating that the UE sends a DM RS on a part of subcarriers allocated by the base station to the UE — 301

The base station generates second information, and sends the second information to the UE, where the second information is information used for indicating the subcarriers for sending the DM RS — 302

FIG. 3

FIG. 4

FIG. 5

# INTERNATIONAL SEARCH REPORT

International application No.

**PCT/CN2012/084228**

**A. CLASSIFICATION OF SUBJECT MATTER**

H04W 28/16 (2009.01) i

According to International Patent Classification (IPC) or to both national classification and IPC

**B. FIELDS SEARCHED**

Minimum documentation searched (classification system followed by classification symbols)

IPC: H04L; H04W

Documentation searched other than minimum documentation to the extent that such documents are included in the fields searched

Electronic data base consulted during the international search (name of data base and, where practicable, search terms used)

CPRSABS, CNKI , DWPI: uplink, adjacent, reference signal, cell, sub-carrier

**C. DOCUMENTS CONSIDERED TO BE RELEVANT**

| Category* | Citation of document, with indication, where appropriate, of the relevant passages | Relevant to claim No. |
|---|---|---|
| A | CN 101534285 A (ZTE CORP.) 16 September 2009 (16.09.2009) the whole document | 1-29 |
| A | CN 101433038 A (LUCENT TECHNOLOGIES INC.) 13 May 2009 (13.05.2009) the whole document | 1-29 |
| A | US 2010157917 A1 (ELECTRONICS & TELECOM RES INST) 24 June 2010 (24.06.2010) the whole document | 1-29 |
| A | US 2011176634 A1 (PANTECH CO LTD) 21 July 2011 (21.07.2011) the whole document | 1-29 |

☐ Further documents are listed in the continuation of Box C.     ☒ See patent family annex.

| | |
|---|---|
| * Special categories of cited documents: <br><br> "A" document defining the general state of the art which is not considered to be of particular relevance <br><br> "E" earlier application or patent but published on or after the international filing date <br><br> "L" document which may throw doubts on priority claim(s) or which is cited to establish the publication date of another citation or other special reason (as specified) <br><br> "O" document referring to an oral disclosure, use, exhibition or other means <br><br> "P" document published prior to the international filing date but later than the priority date claimed | "T" later document published after the international filing date or priority date and not in conflict with the application but cited to understand the principle or theory underlying the invention <br><br> "X" document of particular relevance; the claimed invention cannot be considered novel or cannot be considered to involve an inventive step when the document is taken alone <br><br> "Y" document of particular relevance; the claimed invention cannot be considered to involve an inventive step when the document is combined with one or more other such documents, such combination being obvious to a person skilled in the art <br><br> "&"document member of the same patent family |

| Date of the actual completion of the international search | Date of mailing of the international search report |
|---|---|
| 31 January 2013 (31.01.2013) | 28 February 2013 (28.02.2013) |

| Name and mailing address of the ISA <br> State Intellectual Property Office of the P. R. China <br> No. 6, Xitucheng Road, Jimenqiao <br> Haidian District, Beijing 100088, China <br> Facsimile No. (86-10)62019451 | Authorized officer <br><br> QIN, Sheng <br><br> Telephone No. (86-10)62411225 |

Form PCT/ISA /210 (second sheet) (July 2009)

## INTERNATIONAL SEARCH REPORT
Information on patent family members

| International application No. |
| --- |
| **PCT/CN2012/084228** |

| Patent Documents referred in the Report | Publication Date | Patent Family | Publication Date |
| --- | --- | --- | --- |
| CN 101534285 A | 16.09.2009 | None | |
| CN 101433038 A | 13.05.2009 | US 7701919 B2 | 20.04.2010 |
| | | EP 2016729 A2 | 21.01.2009 |
| | | KR 20090008274 A | 21.01.2009 |
| | | WO 2007133411 A2 | 22.11.2007 |
| | | WO 2007133411 A3 | 10.01.2008 |
| | | US 2008123616 A1 | 29.05.2008 |
| | | JP 2009535984 A | 01.10.2009 |
| | | IN 200805759 P4 | 27.03.2009 |
| | | KR 1036448 B1 | 24.05.2011 |
| US 2010157917 A1 | 24.06.2010 | KR 1189769 B1 | 10.10.2012 |
| | | KR 20100071479 A | 29.06.2010 |
| US 2011176634 A1 | 21.07.2011 | WO 2011087345 A2 | 21.07.2011 |
| | | EP 2526630 A2 | 28.11.2012 |
| | | KR 20110084594 A | 26.07.2011 |
| | | WO2011087345 A3 | 01.12.2011 |

Form PCT/ISA /210 (patent family annex) (July 2009)

**EP 2 775 759 A1**

## REFERENCES CITED IN THE DESCRIPTION

**Patent documents cited in the description**

- CN 201110348340X